# EUROPÄISCHE PATENTSCHRIFT

(11) **EP 2 632 606 B1**
(45) Veröffentlichungstag und Bekanntmachung des Hinweises auf die Patenterteilung: **04.07.2018**
(21) Anmeldenummer: 11775947.2
(22) Anmeldetag: 26.10.2011
(51) Int. Cl.: B05C 17/005

(54) **KOLBEN UND KARTUSCHENANORDNUNG HIERMIT**
PISTON AND CARTRIDGE ARRANGEMENT HAVING SAID PISTON
PISTON ET AGENCEMENT DE CARTOUCHE LE COMPRENANT

(30) Priorität: 04.02.2011 DE 202011002412 U; 26.10.2010 DE 102010049378
(43) Veröffentlichungstag der Anmeldung: 04.09.2013
(73) Patentinhaber: Kettenbach GmbH & CO. KG, 35713 Eschenburg (DE)
(72) Erfinder: BUBLEWITZ, Alexander, 35745 Herborn (DE); REBER, Jens-Peter, 58540 Meinerzhagen (DE)
(74) Vertreter: Keil & Schaafhausen Patent- und Rechtsanwälte PartGmbB
(86) Internationale Anmeldenummer: PCT/EP2011/068774
(87) Internationale Veröffentlichungsnummer: WO 2012/055921

(56) Entgegenhaltungen:
- EP-A1- 0 344 491
- EP-A1- 1 738 834
- EP-A1- 2 116 484

## Beschreibung

Die Erfindung betrifft einen Kolben, insbesondere zur Verwendung als Ausbring- und/oder Verschlusskolben einer Kartusche, mit einem Grundkörper, der eine umlaufende, als Dichtfläche ausgebildete Seitenwand und eine stirnseitige Wand aufweist, in der eine Entlüftungsöffnung vorgesehen ist. Weiter betrifft die Erfindung eine Kartuschenanordnung mit einem derartigen Kolben.

Zur Lagerung und zum Transport von Stoffen oder Stoffgemischen werden bspw. im Bereich der Dentalwerkstoffe häufig kartuschenartige Behälter eingesetzt, in welchen die Stoffe eingefüllt und durch einen Kolben verschlossen aufbewahrt werden. Diese Kartuschen können dann auch zum Austragen der Stoffe verwendet werden, indem der Kolben in dem Behälter verschoben wird, so dass durch einen Auslassstutzen in dem Behälter der Stoff definiert abgegeben und bspw. gemischt oder direkt verbraucht werden kann.

Da einige Stoffe dazu neigen, mit der nach dem Befüllen der Kartusche und dem Einsetzen des Kolbens in der Kartusche verbleibenden Restluft zu reagieren, ist man bestrebt, die Restluft möglichst vollständig aus dem Behälter entweichen zu lassen. Etwaige in dem Behälter verbleibende Restluft zwischen dem Kolben und dem in der Kartusche befindlichen Stoff wird auch deshalb als nachteilig empfunden, weil die Restluft ein kompressibles Polster bildet, das die Genauigkeit der Dosierung beim Aufbringen des Stoffes aus der Kartusche erschwert.

Die Sulzer Chemtech AG, CH-8404 Winterthur, hat daher ein System angeboten, bei welchem der nach dem Befüllen der Kartusche in diese eingesetzte Kolben eine zentrale Entlüftungsöffnung hat, so dass Restluft beim Einsetzen des Kolbens in die Kartusche entweichen kann. Sobald die Restluft aus der Kartusche entwichen ist, wird die Entlüftungsöffnung durch einen Stopfen verschlossen.

Dieses System wird in der Anwendung teilweise als nachteilig empfunden, da durch hohen Innendruck innerhalb der Kartusche der Stopfen aus der Entlüftungsöffnung des Kolbens herausgedrückt werden kann. Zudem ist das Einsetzen des Kolbens aufwendig, da in einem weiteren Arbeitsschritt der Stopfen als ein separates Bauteil in den Kolben eingesetzt werden muss.

Die EP 1 738 834 A1 beschreibt einen Kolben, der einen an der Unterseite angebrachten Verschlussstopfen aufweist, der beim Entlüften durch die in der Kartusche vorgesehenen Materialien nach oben bewegt und dadurch verschlossen wird. Dies führt jedoch zu Lufteinschlüssen, wenn die zum Bewegen des Verschlussstopfens aufzuwendende Kraft zu gering bemessen wird. Wird die aufzuwendende Kraft jedoch zu hoch angesetzt kommt es zum Austragen der Materialien durch die Entlüftungsöffnung, sodass dieses System ähnlich nachteilhaft ist, wie das oben beschriebene System der Sulzer Chemtech AG.

Die EP 0 344 491 A1 schlägt vor, einen der Kolben mit einer konisch zulaufenden Bodenfläche vorzusehen, wobei die Bodenfläche zentral mit einer Entlüftungsöffnung versehenen ist. Es kommt jedoch gerade bei viskosen Materialien häufig vor, dass sich beim Befüllen einer Kartusche in der Mitte mehr Material ansammelt als im Randbereich. Während im Randbereich noch Luft eingeschlossen ist, kommt es daher regelmäßig zu einem Verstopfen des Entlüftungskanals durch das Material.

Aufgabe der vorliegenden Erfindung ist es demgegenüber, einen Kolben sowie eine Kartuschenanordnung hiermit bereitzustellen, die ein Entweichen der Restluft und dennoch ein sicheres und rasches Verschließen eines Behälters ermöglichen.

Diese Aufgabe wird erfindungsgemäß im Wesentlichen mit einem Kolben mit dem Merkmal des Anspruchs 1 sowie einer Kartuschenanordnung mit dem Merkmal des Anspruchs 12 gelöst.

Ein erfindungsgemäßer Kolben weist einen Grundkörper auf, der einen mit Dichtmitteln versehene Seitenwand und eine stirnseitige Wand aufweist, in welcher eine Entlüftungsöffnung vorgesehen ist. Diese Entlüftungsöffnung erstreckt sich durch den gesamten Grundkörper hindurch, so dass ein Luftaustausch zwischen der Seite der stirnseitigen Wand (in Förderrichtung gelegen) und der Rückseite des Kolbens möglich ist. In der Entlüftungsöffnung ist dabei ein Verschlusselement drehbar gelagert, wobei durch eine relative Drehung des Verschlusselements in der Entlüftungsöffnung ein Entlüftungskanal geöffnet beziehungsweise geschlossen werden kann. Mit anderen Worten ist es möglich, mit einer Drehung des Verschlusselements die Strömungsverbindung zwischen der in Förderrichtung gelegenen Seite des Kolbens und der rückwärtigen Seite des Kolbens herzustellen beziehungsweise zu unterbinden.

Nach einer ersten Ausführungsform der Erfindung kann das Verschlusselement eine zumindest abschnittsweise zylindrische Außenfläche aufweisen, in der wenigstens eine Vertiefung, die einen Teil des Entlüftungskanals bildet, ausgebildet ist. Die Entlüftungsöffnung weist dabei eine zumindest abschnittsweise zylindrische Innenfläche auf, in der wenigstens ein derart an die Vertiefung angepasster Vorsprung ausgebildet ist, dass der Vorsprung zum Verschließen des Entlüftungskanals in die Vertiefung eingreifen kann. Alternativ hierzu ist es auch möglich, dass die Vertiefung in der zylindrischen Innenfläche der Entlüftungsöffnung vorgesehen ist, während der Vorsprung in der Außenfläche des Verschlusselements vorgesehen ist. Bei beiden Alternativen ist die Strömungsverbindung durch den Kanal geöffnet, wenn der Vorsprung nicht in der Vertiefung liegt beziehungsweise der Entlüftungskanal wird geschlossen, indem der Vorsprung in die Vertiefung eingebracht wird.

Nach einer zweiten Ausführungsform der Erfindung kann das Verschlusselement einen mit einer Durchbrechung versehenen ersten Verschlussabschnitt aufweisen, der an einem ebenfalls mit einer Durchbrechung versehenen zweiten Verschlussabschnitt in der Entlüftungsöffnung anliegt. Dabei können die Durchbrechungen durch relative Drehung des Verschlusselements in der Entlüftungsöffnung zum Öffnen des Entlüftungskanals in Überdeckung beziehungsweise zum Verschließen des Entlüftungskanals aus der Überdeckung gebracht werden. Die Verschlussabschnitte können dabei beispielsweise als radial nach innen beziehungsweise radial nach außen vorstehende flanschartige Abschnitte ausgestaltet sein, die mit wenigstens einer Ausnehmung beziehungsweise wenigstens einer Durchgangsöffnung versehen sind. Bei geöffnetem Entlüftungskanal kann Restluft aus einem Behälter durch die beiden Durchbrechungen hindurch durch den Kolben entweichen.

Die Entlüftungsöffnung kann in dem Grundkörper des Kolbens als eine einfache Durchgangsöffnung ausgebildet sein oder beispielsweise abgestuft mit unterschiedlichen Durchmesserbereichen gestaltet sein, die zum Beispiel eine Aufnahme für das Verschlusselement bilden.

Erfindungsgemäß ist vorgesehen, dass das Verschlusselement mit einer Platte oder Scheibe versehen ist, die die stirnseitige Wand zumindest abschnittsweise überdeckt. In der stirnseitigen Wand des Kolbens kann zudem eine Vertiefung vorgesehen sein, die etwa der Größe der Platte beziehungsweise Scheibe entspricht, so dass diese Platte oder Scheibe zumindest näherungsweise in einer Ebene mit der übrigen Fläche der stirnseitigen Wand liegt. Wenn in der stirnseitigen Wand zu der Entlüftungsöffnung führende Schlitze vorgesehen sind, verlaufen diese auch in dem durch die Platte oder Scheibe abgedeckten Bereich. Diese Platte oder Scheibe kann die Entlüftung verbessern, indem das auszubringende Material nicht oder später in die Schlitze beziehungsweise die Entlüftungsöffnung eindringen kann.

Die Dichtwirkung zwischen dem Verschlusselement und dem Grundkörper des Kolbens kann dadurch verbessert werden, dass diese aus unterschiedlich weichem Material bestehen. Vorzugsweise ist das Material des Grundkörpers dabei weicher als das des Verschlusselements.

Unabhängig davon liegt der Erfindung der Gedanke zugrunde, dass die Entlüftungsöffnung durch ein Verschlusselement abgedichtet werden kann, welches bereits verliersicher in dem Kolben aufgenommen ist, wenn dieser bspw. in das offene Ende einer Kartusche eingesetzt wird. Hierbei soll die Restluft während des Einsetzens des Kolbens entweichen können und die Entlüftungsöffnung soll durch Betätigung des Verschlusselements rasch abgedichtet werden können. Dies kann bspw. dadurch erfolgen, dass in dem Grundkörper zusätzlich eine mit der Entlüftungsöffnung in Strömungsverbindung stehende Aufnahme vorgesehen ist, in welcher ein Verschlusselement derart gehalten ist, dass durch eine Drehung des Verschlusselements relativ zu der Aufnahme eine Strömungsverbindung zwischen der Entlüftungsöffnung und einem Entlüftungskanal hergestellt oder unterbrochen werden kann. Mit anderen Worten kann das Verschlusselement, das innerhalb des Kolbens in axialer Richtung nicht verschiebbar fixiert ist, durch eine Drehung aus einer die Entlüftungsöffnung freigebenden Position in eine die Entlüftungsöffnung verschließende Position gebracht werden und umgekehrt. Das Verschlusselement kann auch mittels einer Gewindeverbindung innerhalb der Aufnahme befestigt werden. Hierzu können auf der Außenfläche des Verschlusselements Gewindeabschnitte vorgesehen sein.

Der erfindungsgemäße Kolben zeichnet sich dabei durch den Vorteil aus, dass das Verschlusselement nicht nachträglich in den Kolben eingesetzt werden muss. Die Handhabung des Kolbens wird folglich erleichtert, da lediglich eine Drehung des Verschlusselements erforderlich ist, um die Entlüftungsöffnung nach dem Abweichen der Restluft zu verschließen. Zusätzlich kann das Verschlusselement auch nicht bspw. durch hohen Innendruck innerhalb einer Kartusche aus dem Kolben herausgedrückt werden, da das Verschlusselement sicher in dem Grundkörper gehalten ist und die Abdichtung nicht durch eine axiale Bewegung sondern durch eine Rotations- oder Drehbewegung erfolgt.

In Weiterbildung des Erfindungsgedankens ist es vorgesehen, dass das Verschlusselement derart in der Aufnahme gehalten ist, das das Verschlusselement gegen eine Bewegung in einer von der Entlüftungsöffnung wegweisenden Richtung gesichert ist. Dies kann bspw. über eine Rast- oder Schnappverbindung erfolgen, mit der das Verschlusselement in der Aufnahme gehalten ist.

Nach einer bevorzugten Ausführungsform der Erfindung ist das Verschlusselement im Wesentlichen zylindrisch ausgebildet, wobei auf der der Entlüftungsöffnung zugewandten Seite des Verschlusselements eine Bodennut und auf dessen Außenmantelfläche wenigstens eine seitliche Nut vorgesehen sind. Die Bodennut und die wenigstens eine seitliche Nut sind vorzugsweise Bestandteile des Entlüftungskanals, über welchen Restluft aus der Entlüftungsöffnung in die Umgebung entweichen kann. Die Anordnung der Bodennut und/oder der seitlichen Nut kann dabei derart gewählt sein, dass die Bodennut durch eine Drehung des Verschlusselements innerhalb der Aufnahme in Strömungsverbindung mit der Entlüftungsöffnung gebracht werden kann bzw., dass eine Strömungsverbindung zwischen der Entlüftungsöffnung und der Bodennut durch die Drehung unterbrochen wird. Alternativ oder zusätzlich hierzu ist es auch möglich, dass durch die Drehung die wenigstens eine seitliche Nut verschlossen wird bzw. eine Strömungsverbindung zur Umgebung hergestellt wird.

Das Verschlusselement und/oder die Aufnahme können erfindungsgemäß Rastmittel aufweisen, die eine Drehung des Verschlusselements in der Aufnahme in wenigstens einer Drehrichtung erschweren oder verhindern. Hierdurch ist es möglich, ein unbeabsichtigtes Zurückdrehen des Verschlusselements nach dem Verschließen des Kolbens zu verhindern. Dabei wird es besonders bevorzugt, wenn die wenigstens eine seitliche Nut des Verschlusselements sowie ein entsprechend konturierter Vorsprung innerhalb der Aufnahme diese Rastmittel bilden, so dass zusätzlich zu der Verdrehsicherung durch die Rastmittel gleichzeitig auch die Strömungsverbindung zwischen der Entlüftungsöfnung und der Umgebung unterbrochen bzw. hergestellt werden kann.

Alternativ oder zusätzlich hierzu können in dem Verschlusselement und/oder in der Entlüftungsöffnung Anschlagmittel vorgesehen sein, die eine Drehung des Verschlusselements in der Entlüftungsöffnung begrenzen, insbesondere auf weniger als 180°, vorzugsweise auf weniger als etwa 90°.

Die als Dichtfläche ausgebildete Seitenwand des erfindungsgemäßen Kolbens kann mit wenigstens einer Dichtlippe, wenigstens einem Abstreifersteg und/oder mit einem Dichtring versehen sein, der bspw. in einer umlaufenden Nut aufgenommen ist. Hierdurch ist es möglich, eine zuverlässige Abdichtung des Kolbens bspw. innerhalb einer Kartusche zu erreichen. Der Dichtring kann bspw. als ein O-Ring oder ein X-Ring ausgebildet sein.

Die erfindungsgemäße Kartuschenanordnung weist wenigstens eine Kartusche sowie einen in diese eingesetzten Kolben der oben genannten Art auf. Die Kartusche kann hierbei ein vorderes Ende mit einem Auslassstutzen und ein gegenüberliegendes, hinteres Ende aufweisen, das mit einer Aufnahmeöffnung versehen ist, die durch den Kolben verschlossen werden kann.

Die Erfindung wird nachfolgend anhand eines Ausführungsbeispiels und unter Bezugnahme auf die Zeichnung näher erläutert. Dabei bilden alle beschriebenen und/oder bildlich dargestellten Merkmale für sich den Gegenstand der Erfindung, unabhängig von ihrer Zusammenfassung in den Ansprüchen oder deren Rückbezügen. Es zeigen schematisch:
- Fig. 1: in Explosionsansicht die Komponenten einer nicht erfindungsgemäßen Kartuschenanordnung nach einer ersten Ausführungsform,
- Fig. 2: in Schnittansicht die Ausbringkolben der Kartuschenanordnung nach Fig. 1,
- Fig. 3: in Perspektivansicht einen Drehverschluss eines Ausbringkolbens nach Fig. 2,
- Fig. 4: in einer weiteren Perspektivansicht den Drehverschluss nach Fig. 3,
- Fig. 5: in Explosionsansicht die Komponenten zweier erfindungsgemäßer Kolben nach einer zweiten Ausführungsform,
- Fig. 6: in Perspektivansicht die Oberseite der Kolben nach Figur 5,
- Fig. 7: in Perspektivansicht die Unterseite der Kolben nach Figur 5
- Fig. 8: in teilweise geschnittener Perspektivansicht die Kolben nach Fig. 5 in geöffneter Stellung, und
- Fig. 9: in teilweise geschnittener Perspektivansicht die Kolben nach Fig. 5 in geschlossener Stellung, und
- Fig. 10: in Explosionsansicht die Komponenten zweier erfindungsgemäßer Kolben nach einer dritten Ausführungsform,
- Fig. 11: in Perspektivansicht die Unterseite eines Kolbens nach Figur 10,
- Fig. 12: in teilweise geschnittener Perspektivansicht die Kolben nach Fig. 10 in einer Kartusche in geöffneter Stellung, und
- Fig. 13: in teilweise geschnittener Perspektivansicht die Kolben nach Fig. 10 in einer Kartusche in geschlossener Stellung.

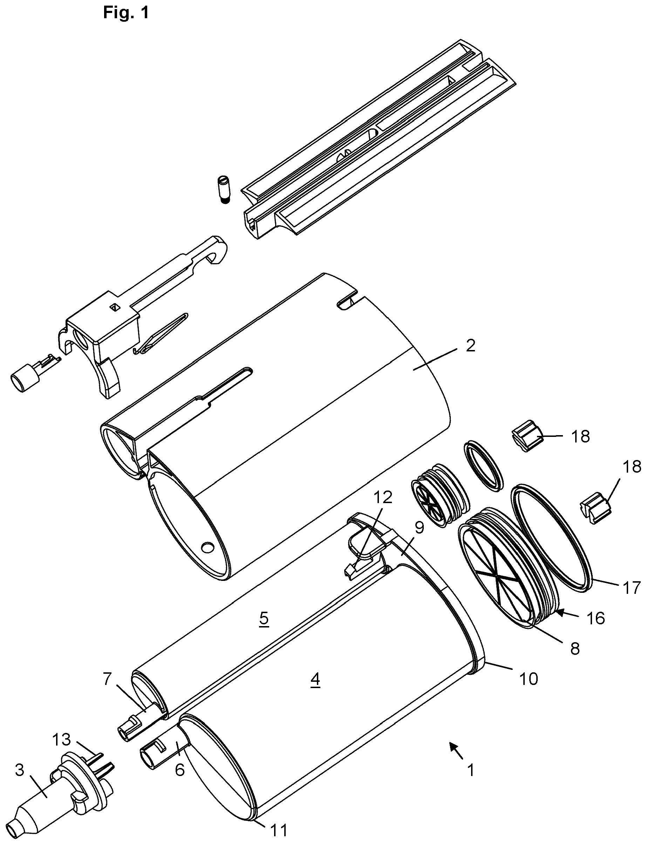

Die in Figur 1 dargestellte Kartuschenanordnung weist im Wesentlichen eine Doppelkartusche 1 sowie eine Stützkartusche 2 auf. Die Doppelkartusche 1 ist dabei mit einem Mischer 3 lösbar verbindbar.

Die Doppelkartusche 1 besteht im Wesentlichen aus zwei voneinander getrennten Vorratsbehälter 4, 5, deren Gehäuse im Wesentlichen zylindrisch ausgebildet sind. Das in Figur 1 links dargestellte, vordere Ende der Vorratsbehälter 4, 5 ist durch eine stirnseitige Wand geschlossen, die ausreichend dick dimensioniert ist, um auch hohen Kräften beim Austragen der Komponenten standzuhalten. Aus dieser stirnseitigen Wand steht jeweils ein Auslassstutzen 6 bzw. 7 hervor, der eine Auslassöffnung des jeweiligen Vorratsbehälters bildet. Die Auslassstutzen 6, 7 sind in der dargestellten Ausführungsform dicht nebeneinander liegend, d.h. nicht mittig in der stirnseitigen Wand der Vorratsbehälter, angeordnet. Dies ermöglicht es, den Mischer 3 vergleichsweise kompakt zu gestalten, da dessen Einlassöffnungen nicht weit voneinander beabstandet sein müssen. Auf der gegenüberliegenden, hinteren Seite sind die Vorratsbehälter 4, 5 offen, so dass unten näher erläuterte Ausbringkolben 8 zur Abdichtung in die Vorratsbehälter eingesetzt werden können. Die Ausbringkolben 8 dienen gleichzeitig dazu, die in den Vorratsbehältern 4, 5 aufgenommenen Stoffe, bspw. Komponenten eines Abformmaterials oder dgl. durch die Auslassstutzen 6, 7 auszubringen.

An ihrem hinteren Ende sind die Vorratsbehälter 4, 5 über eine Brücke 9 miteinander verbunden. Die Brücke 9 ist einstückig mit einem flanschartigen Rand 10 ausgebildet, welcher über das hintere Ende der Vorratsbehälter 4, 5 hinausragt. Am vorderen Ende der beiden Vorratsbehälter 4, 5 ist in der stirnseitigen Wand eine umlaufende Nut 11 vorgesehen sein, die als Anschlag in der Stützkartusche 2 dient.

Die Brücke 9 ist in der dargestellten Ausführungsform mit einem Rasthebel 12 versehen, welcher einstückig mit der Brücke 9 und den Vorratsbehältern 4, 5 ausgebildet ist. An dem in Ausbringrichtung vorderen Ende des Rasthebels 12 ist ein Rasthaken vorgesehen, dessen Funktion unten näher erläutert wird.

Die Auslassstutzen 6, 7 der Vorratsbehälter 4, 5 sind mit dem Mischer 3, der in der dargestellten Ausführungsform ein dynamischer, das heißt angetriebener, Mischer ist, verbindbar. Hierzu werden Einlassstutzen des Mischers in die Auslassstutzen 6, 7 eingeschoben. Alternativ ist es auch möglich, dass die Einlassstutzen des Mischers die Auslassstutzen der Doppelkartusche 1 umgreifen. An dem Mischer 3 ist eine Führungsrippe 13 ausgebildet, die von dem hinteren Ende des Mischers 3 in Richtung zu der Doppelkartusche 1 wegragt. Auf jedem der Auslassstutzen 6, 7 ist eine Rastnocke vorgesehen, deren Abstand derart bemessen ist, dass die Führungsrippe 13 des Mischers 3 zwischen den beiden Rastnocken 14 geführt wird, wenn der Mischer 3 auf die Auslassstutzen 6, 7 aufgesteckt wird. In der dargestellten Ausführungsform ist zusätzlich auf jedem Auslassstutzen 6, 7 ein Führungssteg vorgesehen, der sich in axialer Richtung erstreckt und mit der Führungsrippe 13 des Mischers 3 zusammenwirkt. Die Rastnocken und Führungsstege erleichtern somit in Zusammenwirken mit der Führungsrippe 13 das positionsgenaue Aufsetzen des Mischers 3. Das Einführen einer in den Figuren nicht dargestellten Mischerwelle eines Ausbringgerätes in eine entsprechende Aufnahme des Mischers 3 kann dadurch erleichtert werden, dass in der Führungsrippe 13 des Mischers 3 eine Aussparung vorgesehen ist, die den Blick auf die bspw. mit einem Innensechskant gestaltete Aufnahme des Mischers 3 freigibt.

Die Stützkartusche 2 ist in der dargestellten Ausführungsform aus zwei einstückig miteinander verbundenen Metallrohren gebildet, welche beidseits offen sind. Die Rohre, die bspw. aus Aluminium bestehen, haben eine Wandstärke von etwa 1 mm bis etwa 2 mm, insbesondere etwa 1,3 mm. An dem in Figur 1 linken, vorderen Ende sind diese Rohre der Stützkartusche 2 zumindest bereichsweise mit einem nach innen ragenden Kragen versehen, der mit der Nut 11 der Doppelkartusche 1 zusammenwirken kann, um die Doppelkartusche 1 in der Stützkartusche 2 abzustützen. Darüber hinaus ist die Länge der Doppelkartusche 1 derart an die Länge der Stützkartusche 2 angepasst, dass die Brücke 9 bzw. der flanschartige Rand 10 am hinteren Ende der Doppelkartusche 1 an dem hinteren Ende des jeweiligen Rohres der Stützkartusche 2 anliegt, wenn die Doppelkartusche 1 in die Stützkartusche 2 eingebracht wird. Damit ist die Doppelkartusche 1 in Vorschubrichtung der Ausbringkolben 8 an ihren beiden Enden in der Stützkartusche 2 abgestützt und gesichert.

Alternativ zu der dargestellten Ausführungsform kann die Stützkartusche 2 mit einer stirnseitigen Wand versehen sein, die den nach innen ragenden Kragen ersetzt oder sich an diesem abstützt. Eine solche stirnseitige Wand oder Platte kann auch in die Stützkartusche 2 eingeschraubt oder eingeklebt sein. Durch eine stirnseitige Wand wird die Doppelkartusche 1 noch besser in der Stützkartusche 2 abgestützt. Die Wand kann entweder Öffnungen aufweisen, die das Durchtreten der Auslassstutzen 6, 7 ermöglichen oder es können in der Wand selbst Stutzen vorgesehen sein, die die Auslassstutzen 6, 7 aufnehmen können.

Zusätzlich ist in jedem Rohr der Stützkartusche 2 ein Fenster vorgesehen, durch welches die Doppelkartusche 1 von außen sichtbar ist. Dies ermöglicht es auch, bspw. eine Farbmarkierung oder dgl. Kodierung auf der Doppelkartusche 1 durch das Fenster zu erkennen.

In der Stützkartusche 2 ist in einem Bereich zwischen den beiden Rohren ein Schlitz zur Aufnahme einer Adapterschiene vorgesehen. Die Adapterschiene kann in diesen Schlitz eingeschoben und dort mittels einer Schraube fixiert werden. Die Adapterschiene kann wie die Stützkartusche 2 aus Metall, insbesondere Aluminium, bestehen oder vorzugsweise aus Kunststoff.

Weiter kann die Stützkartusche 2 mit einem Sicherungsbügel versehen sein, welcher an einem Scharnier in der Adapterschiene schwenkbar angelenkt werden kann. Der Sicherungsbügel weist einen etwa U-förmigen Haltebereich auf, welcher den Mischer 3 bereichsweise umgreifen und damit auf den Auslassstutzen 6, 7 befestigen kann. Über einen Rasthaken kann der Sicherungsbügel in der Adapterschiene bzw. der Stützkartusche 2 in seiner den Mischer 3 fixierenden Position befestigt werden. Um den Sicherungsbügel aus seine sich etwa parallel zu den Rohren der Stützkartusche 2 erstreckenden, verrasteten Position in eine den Mischer 3 freigebende Position zu verschwenken, ist ein Entriegelungsknopf vorgesehen, der den Rasthaken in eine die für Rastung freigebende Stellung verschwenken kann. Durch eine in Figur 1 angedeutete Feder kann der Sicherungsbügel nach Betätigung des Entriegelungsknopfes selbsttätig in die Position verschwenken, in welcher ein Wechsel bzw. die Montage des Mischers 3 möglich ist. Weiter ist in der Adapterschiene bzw. der Stützkartusche 2 ein Rastvorsprung vorgesehen, welchen der Rasthebel 12 der Doppelkartusche 1 hintergreift, wenn diese in die Stützkartusche 2 eingeschoben wird. Die Doppelkartusche 1 ist hierdurch auch gegen die Vorschubrichtung der Ausbringkolben 8 innerhalb der Stützkartusche 2 gesichert. Zur Entnahme der Doppelkartusche 1 aus der Stützkartusche 2 muss ein Benutzer auf den oberen Bereich des Rasthebels 12 drücken, um die Verrastung wieder zu lösen.

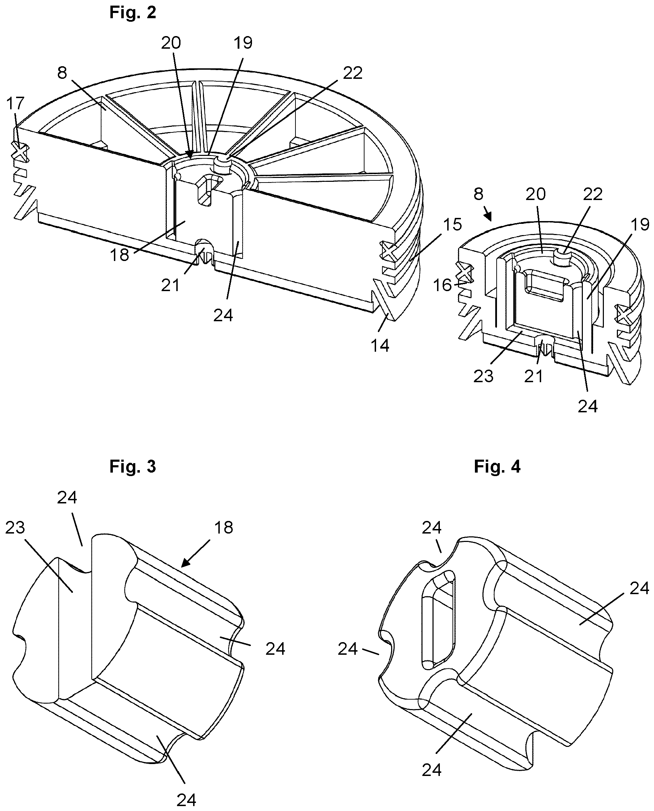

Wie in Figur 2 dargestellt, weisen die Ausbringkolben 8 jeweils einen etwa zylinderscheibenartigen Grundkörper mit zwei angeformten Dichtlippen 14 sowie mit zwei Abstreiferstegen 15 auf, die um den Außenumfang der Ausbringkolben umlaufen. Zusätzlich ist in einer umlaufenden Nut 16 ein Dichtungsring 17, der bspw. als O-Ring oder als X-Ring ausgebildet sein kann, aufgenommen. Auf diese Weise ist der Ausbringkolben auf der Innenwand der Kartusche abgedichtet verschiebbar.

In jedem Ausbringkolben 8 verläuft ein Entlüftungskanal, welcher über einen Drehverschluss 18 abgedichtet werden kann. Hierzu ist in jedem Ausbringkolben eine im Wesentlichen zylindrische bzw. topfartige Aufnahme 19 für einen Drehverschluss 18 vorgesehen. Diese Aufnahme weist an ihrem in Figur 2 oberen Rand eine Wulst 20 auf, die eine Bewegung des Drehverschlusses 18 in axialer Richtung verhindert. Auf diese Weise wird bei sehr hohen Austragkräften eines Ausbringgerätes (Dispensers) und dem damit verbundenen Gegendruck der Dentalmasse verhindert, dass der Drehverschluss 18 axial aus dem Ausbringkolben wieder nach hinter herausgedrückt wird. Dies würde sonst zu einer Undichtigkeit und damit Verschmutzung des Ausbringgerätes führen. Alternativ zu dem Wulst 20 kann auch eine Gewinde- oder Bajonettverbindung zwischen der Aufnahme 19 und dem Drehverschluss 18 vorgesehen sein.

Die zylindrische Aufnahme 19 steht über eine Entlüftungsöffnung 21 mit dem Innenraum der Vorratsbehälter 4, 5 in Verbindung. Weiter sind in dem dargestellten Ausführungsbeispiel an zwei einander gegenüberliegenden Seiten Rastvorsprünge 22 auf der Innenseite der zylindrischen Aufnahme 19 vorgesehen.

Die in den Figuren 3 und 4 im Detail dargestellten Drehverschlüsse 18 sind jeweils mit einer Bodennut 23 in der in Figur 2 unteren Seite sowie vier in axialer Richtung verlaufenden seitlichen Nuten 24 versehen, von denen jeweils zwei mit der Bodennut 23 verbunden sind, während die beiden übrigen seitlichen Nuten 24 nicht mit der Bodennut 23 verbunden sind. Auf der der Bodennut 23 gegenüberliegenden Seite ist in jedem Drehverschluss 18 bspw. ein Schlitz vorgesehen, um den Drehverschluss mittels eines Werkzeugs in der zylindrischen Aufnahme zu drehen. Die Rastvorsprünge 22 auf der Innenseite der zylindrischen Aufnahme 19 verhindern dabei eine unbeabsichtigte Drehung der Drehverschlüsse 18.

In dem in Figur 2 rechten Ausbringkolben nehmen die beiden nicht mit der Bodennut 23 verbundenen seitlichen Nuten 24 die Rastvorsprünge 22 auf, so dass über die beiden mit der Bodennut 23 verbundenen seitlichen Nuten 24 ein über die Entlüftungsöffnung 21 mit dem Innenraum der Vorratsbehälter 4, 5 verbundener Entlüftungskanal gebildet wird.

Demgegenüber ist in dem in Figur 2 linken Ausbringkolben der Drehverschluss 18 um 90° gedreht, so dass die beiden mit der Bodennut 23 verbundenen seitlichen Nuten 24 durch die Rastvorsprünge 22 verschlossen werden. Auf diese Weise ist es möglich, nach dem Befüllen der Vorratsbehälter 4, 5 und dem Einsetzen der Ausbringkolben 8 zunächst Restluft aus den Vorratsbehältern entweichen zu lassen und die Ausbringkolben danach durch Betätigung der Drehverschlüsse 18 vollständig abzudichten.

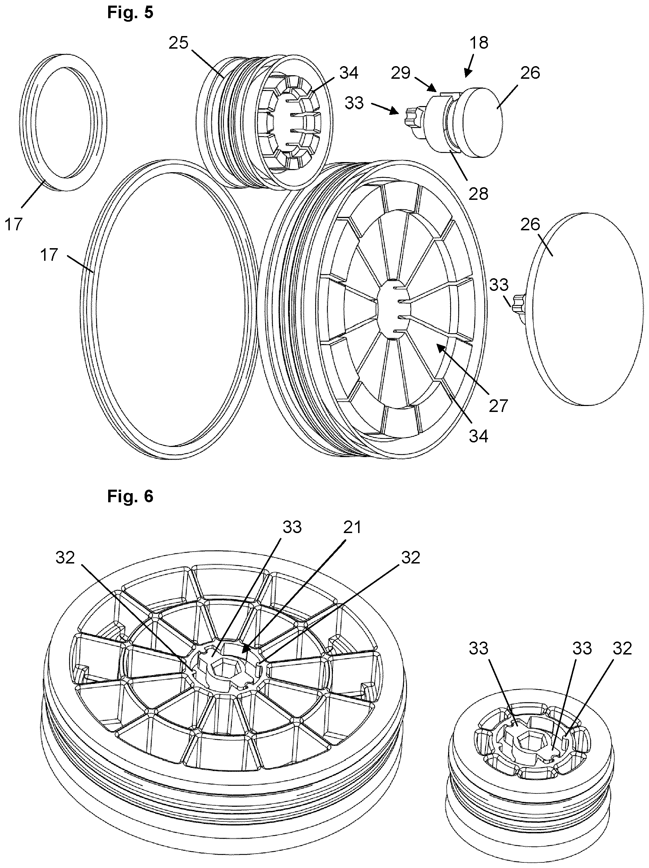

In den Figuren 5 bis 9 ist eine zweite Ausführungsform eines Kolbens dargestellt, wobei die in Bezug auf die vorherige Ausführungsform gleichen Bauteile mit den selben Bezugsziffern versehen sind. Der Kolben 8 weist dabei ebenfalls einen Grundkörper 25 mit einer Entlüftungsöffnung 21 und in der Seitenwand vorgesehenen Dichtmitteln in Form einer Dichtlippe 14 und eines Dichtrings 17 auf. Das Verschlusselement 18 des Kolbens 8 ist ebenfalls als ein Drehverschluss ausgebildet, wobei abweichend von der zuvor beschriebenen Ausführungsform eine Platte 26 an dem Verschlusselement 18 vorgesehen ist. Diese ist in dem in den Figuren 6 bis 9 gezeigten Benutzungszustand des Kolbens auf der in den Figuren unteren Seite des Kolbens 8 in einer Vertiefung 27 der stirnseitigen Wand des Grundkörpers angeordnet.

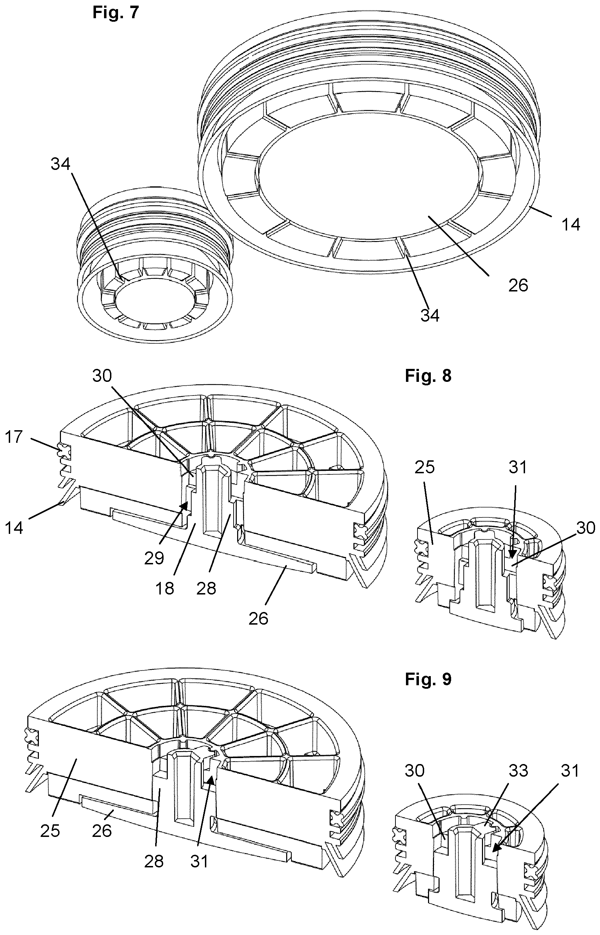

Die Drehverschlüsse 18 nach den Figuren 5 bis 9 erstrecken sich im Wesentlichen vollständig durch die Entlüftungsöffnung 21 beziehungsweise den Grundkörper 25 der Kolben 8 hindurch. Auf der Außenseite eines in der Entlüftungsöffnung 21 aufgenommenen Bereichs des jeweiligen Drehverschlusses 18 ist dabei ein umlaufender Vorsprung 28 ausgebildet, der einen Verschlussabschnitt bildet. In diesem ist eine Durchbrechung 29 vorgesehen, die sich in axialer Richtung des Verschlusselements 18 durch den Verschlussabschnitt 28 erstreckt. Auch im Bereich der Entlüftungsöffnung 21 ist in dem Grundkörper 25 ein radial nach innen gerichteter Vorsprung 30 ausgebildet, der ebenfalls einen Verschlussabschnitt bildet und mit einer Durchbrechung 31 versehen ist. Wie aus den Figuren 8 und 9 ersichtlich ist, liegen die beiden Vorsprünge 28 und 30 aneinander an. Durch eine entsprechende Ausrichtung des Verschlusselements 18 innerhalb der Entlüftungsöffnung 21 können die Durchbrechungen 29 bzw. 31 der beiden Vorsprünge in Überdeckung gebracht werden, um einen Entlüftungskanal freizugeben, durch den Restluft durch den Kolben 8 hindurch entweichen kann.

Um ein ungewolltes Verdrehen des Verschlusselements 18 innerhalb des Grundkörpers 25 zu verhindern, sind in der Entlüftungsöffnung 21 Rastvorsprünge 32 ausgebildet, die mit entsprechenden Rastelementen 33 des Verschlusselements 18 so zusammenwirken, dass zur Verdrehung des Verschlusselements 18 relativ zu dem Grundkörper 25, d. h. zum Öffnen beziehungsweise Verschließen der Entlüftungsöffnung, ein gewisser Widerstand überwunden werden muss.

In der dargestellten Ausführungsform sind zudem in der stirnseitigen Wand des Grundelements 25 mehrere Schlitze 34 ausgebildet, die sich in radialer Richtung erstrecken und in die Entlüftungsöffnung 21 münden. Die Schlitze 34 erstrecken sich dabei auch in dem Bereich der Vertiefung 27, welcher durch die Platte 26 des Verschlusselements 18 überdeckt wird. Die Breite der Schlitze 34 ist so bemessen, dass Restluft durch die Schlitze 34 in die Entlüftungsöffnung 21 entweichen kann, jedoch das Austreten von beispielsweise zähflüssigen oder pastösen Komponenten erschwert oder verhindert wird.

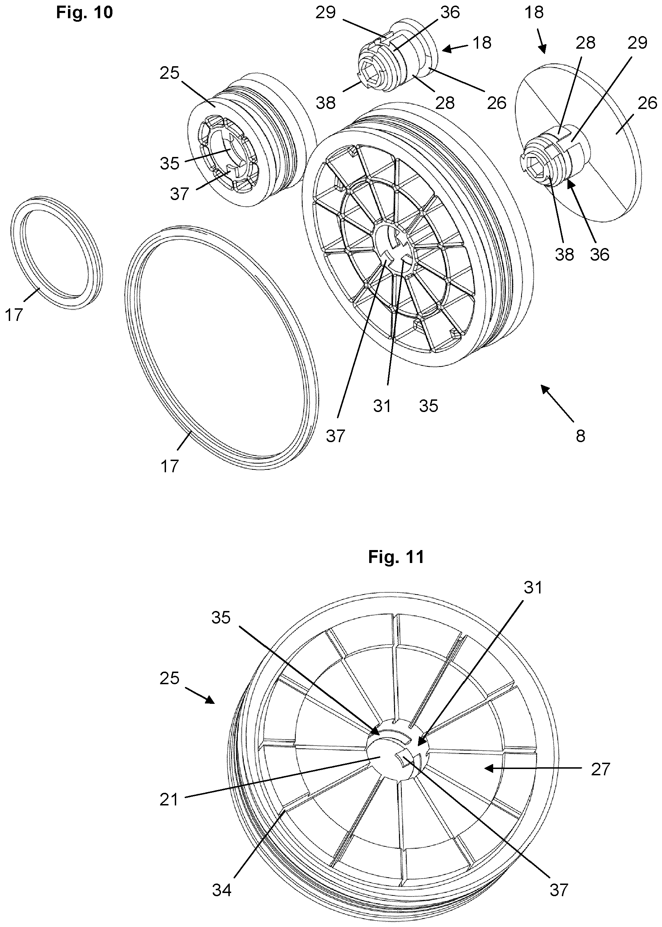

Eine der zweiten Ausführungsform ähnliche dritte Ausführungsform ist in den Figuren 10 bis 13 dargestellt, wobei wiederum die in Bezug auf die vorherige Ausführungsform gleichen Bauteile mit den selben Bezugsziffern versehen sind.

Die Kolben 8 nach der dritten Ausführungsform unterscheiden sich von denen nach der zweiten Ausführungsform im Wesentlichen in der Gestaltung der Entlüftungsöffnung 21 sowie der korrespondierenden Außenfläche des Verschlusselements 18. So ist auf der Innenfläche der Entlüftungsöffnung 21 ein umlaufender Vorsprung 35 ausgebildet, der in eine entsprechende Nut 36 in dem Verschlusselement 18 eingreift, um diese miteinander zu verrasten. Sowohl der Vorsprung 35 als auch die Nut 36 sich jeweils mit Durchbrechungen 31 bzw. 29 versehen, die in Überdeckung gebracht werden können um einen Entlüftungskanal freizugeben, bzw. außer Überdeckung gebracht werden können, um den Entlüftungskanal zu verschließen.

In der dargestellten Ausführungsform ist jedes der beiden Verschlusselemente 18 jeweils mit zwei einander gegenüberliegenden Durchbrechungen 29 versehen, die als axial verlaufende, nutartige Vertiefungen innerhalb des umlaufenden zylindrischen Vorsprungs 28 ausgebildet sind. Die Durchbrechungen 29 verlaufen dabei durch die hierzu senkrechte Nut 36 hindurch, die geringfügig tiefer als die Durchbrechungen 29 ausgebildet sein kann, so dass der Vorsprung 35 die Durchbrechungen 29 sicher verschließen kann.

Die Möglichkeit, das Verschlusselement 18 innerhalb des Grundkörpers 25 zum Öffnen oder Schließen des Entlüftungskanals zu verdrehen, ist in der dritten Ausführungsform durch Anschlagelemente 37 im Bereich der Entlüftungsöffnung 21 des Grundkörpers 25 begrenzt, die mit entsprechenden Gegenanschlagelementen 38 des Verschlusselements 18 zusammenwirken. In der dargestellten Ausführungsform kann das Verschlusselement 18 innerhalb des Grundkörpers 25 um etwa 60° bis etwa 120°, vorzugsweise etwa 90°, verdreht werden.

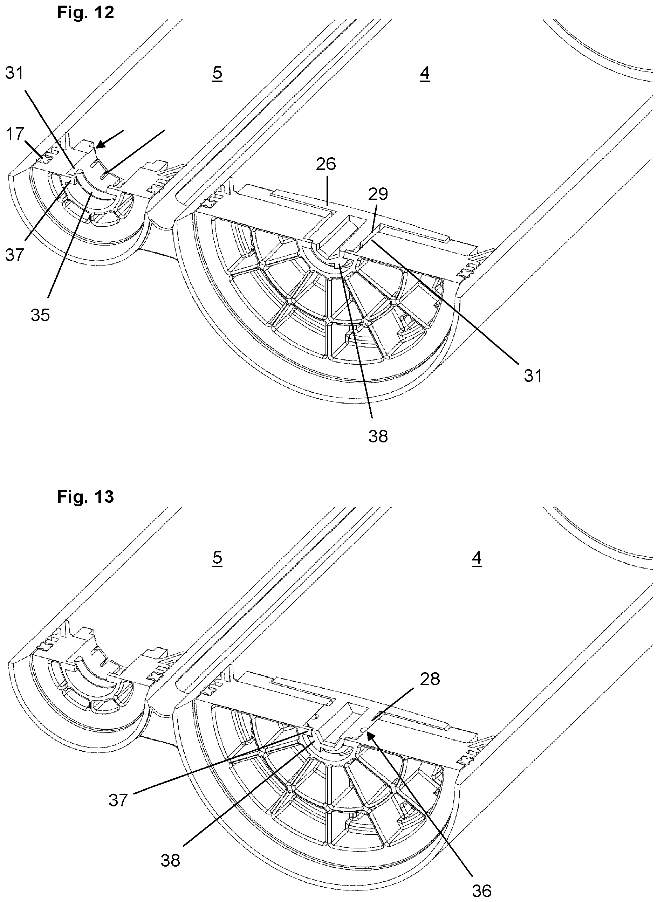

Die Figuren 12 und 13 zeigen die Kolben 8 jeweils in Vorratsbehälter 4, 5 einer Doppelkartusche eingesetzt, wobei in dem kleineren, linken Kolben das Verschlusselement 18 aus Gründen der Übersichtlichkeit weggelassen wurde. Hierdurch ist zu erkennen, dass die Schnittebene durch die einander gegenüberliegenden Durchbrechungen 31 in dem Vorsprung 35 der jeweiligen Entlüftungsöffnung 21 verläuft.

In Figur 12 ist dabei das Verschlusselement 18 so ausgerichtet, dass die beiden einander gegenüberliegenden Durchbrechungen 29, die in die umlaufende Nut 36 münden bzw. durch diese hindurchgehen, mit den Durchbrechungen 31 jeweils einen das Innere des jeweiligen Vorratsbehälters mit der Umgebung verbindenden Entlüftungskanal bilden. Mit anderen Worten werden die beiden axial verlaufenden, nutartigen Durchbrechungen 29 in dem Verschlusselement 18 im Bereich der dazu senkrechten, umlaufenden Nut 36 nicht durch den Vorsprung 35 verschlossen.

Dagegen zeigt Figur 13 einen Zustand, in welchem das Verschlusselement 18 innerhalb des Grundkörpers 25 gegenüber Figur 12 um etwa 90° verdreht ist, so dass der Vorsprung 35 die beiden axial verlaufenden, nutartigen Durchbrechungen 29 in dem Verschlusselement 18 im Bereich der dazu senkrechten, umlaufenden Nut 36 unterbricht und dichtend verschließt. Somit können in dem in Figur 13 gezeigten Zustand weder Luft noch die bspw. pastösen Komponenten, die in den jeweiligen Vorratsbehältern 4, 5 aufgenommen sind, aus diesen in die Umgebung entweichen.

### Bezugszeichenliste

- 1: Doppelkartusche
- 2: Stützkartusche
- 3: Mischer
- 4, 5: Vorratsbehälter
- 6, 7: Auslassstutzen
- 8: Ausbringkolben
- 9: Brücke
- 10: flanschartiger Rand
- 11: Nut
- 12: Rasthebel
- 13: Führungsrippe
- 14: Dichtlippe
- 15: Abstreifersteg
- 16: Nut
- 17: Dichtring
- 18: Drehverschluss
- 19: Aufnahme
- 20: Wulst
- 21: Entlüftungsöffnung
- 22: Rastvorsprung
- 23: Bodennut
- 24: seitliche Nut
- 25: Grundkörper
- 26: Platte
- 27: Vertiefung
- 28: Vorsprung (Verschlussabschnitt)
- 29: Durchbrechung
- 30: Vorsprung (Verschlussabschnitt)
- 31: Durchbrechung
- 32: Rastvorsprung
- 33: Rastelement
- 34: Schlitz
- 35: Vorsprung
- 36: Nut
- 37: Anschlag
- 38: Gegenanschlag

## Patentansprüche

1. Kolben, insbesondere zur Verwendung als Ausbring- und/oder Verschlusskolben einer Kartusche, mit einem Grundkörper (25), der eine mit Dichtmitteln (14, 17) versehene Seitenwand und eine stirnseitige Wand aufweist, in der eine Entlüftungsöffnung (21) vorgesehen ist, wobei in der Entlüftungsöffnung (21) ein Verschlusselement (18) drehbar gelagert ist, wobei durch relative Drehung des Verschlusselements (18) in der Entlüftungsöffnung (21) ein Entlüftungskanal (23, 24) geöffnet bzw. geschlossen werden kann, **dadurch gekennzeichnet, dass** das Verschlusselement (18) eine die stirnseitige Wand wenigstens abschnittsweise überdeckende Platte (26) aufweist.

2. Kolben nach Anspruch 1, **dadurch gekennzeichnet, dass** das Verschlusselement (18) eine zumindest abschnittsweise zylindrische Außenfläche aufweist, in der wenigstens eine Vertiefung (24), die einen Teil des Entlüftungskanals bildet, ausgebildet ist, und dass die Entlüftungsöffnung (21) eine zumindest abschnittsweise zylindrische Innenfläche aufweist, in der wenigstens ein derart an die Vertiefung (24) angepasster Vorsprung (22) ausgebildet ist, dass der Vorsprung (22) zum Verschließen des Entlüftungskanals in die Vertiefung (24) eingreift.

3. Kolben nach Anspruch 1, **dadurch gekennzeichnet, dass** die Entlüftungsöffnung (21) eine zumindest abschnittsweise zylindrische Innenfläche aufweist, in der wenigstens eine Vertiefung, die einen Teil des Entlüftungskanals bildet, ausgebildet ist, und dass das Verschlusselement (18) eine zumindest abschnittsweise zylindrische Außenfläche aufweist, in der wenigstens ein derart an die Vertiefung angepasster Vorsprung ausgebildet ist, dass der Vorsprung zum Verschließen des Entlüftungskanals in die Vertiefung eingreift.

4. Kolben nach Anspruch 1, **dadurch gekennzeichnet, dass** das Verschlusselement (18) einen mit einer Durchbrechung (29) versehenen ersten Verschlussabschnitt (28) aufweist, der an einem ebenfalls mit einer Durchbrechung (31) versehenen zweiten Verschlussabschnitt (30) in der Entlüftungsöffnung (21) anliegt, wobei die Durchbrechungen (29, 31) durch relative Drehung des Verschlusselements (18) in der Entlüftungsöffnung (21) zum Öffnen des Entlüftungskanals in Überdeckung und zum Verschließen des Entlüftungskanals außer Überdeckung gebracht werden können.

5. Kolben nach einem der vorhergehenden Ansprüche, **dadurch gekennzeichnet, dass** das Verschlusselement (18) derart in der der Entlüftungsöffnung (21) gehalten ist, dass das Verschlusselement (18) gegen eine Bewegung in einer von der stirnseitigen Wand wegweisenden Richtung gesichert ist.

6. Kolben nach Anspruch 5, **dadurch gekennzeichnet, dass** das Verschlusselement (18) durch eine Rast- oder Schnappverbindung (20) in der Entlüftungsöffnung (21) gehalten ist.

7. Kolben nach einem der Ansprüche 2 oder 3, **dadurch gekennzeichnet, dass** auf der der stirnseitigen Wand zugewandten Stirnseites des Verschlusselements (18) eine Bodennut (23) vorgesehen ist, die Bestandteil des Entlüftungskanals ist.

8. Kolben nach einem der vorhergehenden Ansprüche, **dadurch gekennzeichnet, dass** das Verschlusselement (18) und/oder die Entlüftungsöffnung (21) Rastmittel (22, 24) aufweisen, die eine Drehung des Verschlusselements (18) in der Entlüftungsöffnung (21) in wenigstens einer Drehrichtung erschweren.

9. Kolben nach einem der vorhergehenden Ansprüche, **dadurch gekennzeichnet, dass** das Verschlusselement (18) und/oder die Entlüftungsöffnung (21) Anschlagmittel (22, 24) aufweisen, die eine Drehung des Verschlusselements (18) in der Entlüftungsöffnung (21) begrenzen, insbesondere auf weniger als 180°.

10. Kolben nach einem der vorhergehenden Ansprüche, **dadurch gekennzeichnet, dass** in der stirnseitigen Wand wenigstens ein radial verlaufender Schlitz (34) vorgesehen ist, der in die Entlüftungsöffnung (21) mündet.

11. Kolben nach einem der vorhergehenden Ansprüche, **dadurch gekennzeichnet, dass** der Grundkörper (25) aus einem weicheren Material als das des Verschlusselements (18) besteht.

12. Kartuschenanordnung mit wenigstens einer Kartusche, die ein vorderes Ende mit einem Auslassstutzen (6, 7) und ein gegenüberliegendes hinteres Ende aufweist, das mit einer Aufnahmeöffnung versehen ist, die mit einem Kolben (8) nach einem der vorhergehenden Ansprüche verschlossen ist.

## Claims

1. A piston, in particular for use as a discharge and/or locking piston of a cartridge, with a base body (25) that has a lateral wall provided with sealants (14, 17) and a front-end wall having a vent (21), wherein in the vent (21) a locking element (18) is mounted rotatable, wherein a venting channel (23, 24) can be opened or closed in the vent (21) by a relative rotation of the locking element (18), **characterized in that** the locking element (18) comprises a plate (26) that covers the front-end wall at least in sections.

2. A piston as recited in claim 1, **characterized in that** the locking element (18) has at least in sections a cylindrical outer surface, in which at least one deepening (24) is designed that forms a part of the venting channel, and that the vent (21) has a cylindrical inner surface at least in sections in which at least one protrusion (22) is formed that is adapted to the deepening (24) in such a way that the protrusion (22) engages with the deepening (24) for locking the the venting channel.

3. A piston as recited in claim 1, **characterized in that** the vent (21) has at least in sections a cylindrical inner surface in which the at least one deepening that constitutes a part of the venting channel is formed, and that the locking element (18) has at least in sections a cylindrical outer surface in which at least one protrusion is formed that is adapted to the deepening in such a way that the protrusion engages with the deepening for locking the venting channel.

4. A piston as recited in claim 1, **characterized in that** the locking element (18) has a first locking section (28) having a through hole (29) that abuts in the vent at a second locking section (30) that is likewise provided with a through hole (31), wherein the through holes (29, 31) can be aligned in the vent (21) by a relative rotation of the locking element (18) to open the venting channel, and misaligned to lock the venting channel.

5. A piston as recited in any one of the previous claims, **characterized in that** the locking element (18) is retained in the vent (21) in such a way that the locking element (18) is locked preventing a movement in a direction pointing away from the front-end wall.

6. A piston as recited in claim 5, **characterized in that** the locking element (18) is retained in the vent (21) by a catch or snap-in connection (20).

7. A piston as recited in claim 2 or 3, **characterized in that** on the front of the locking element (18) that faces the front-end wall, a bottom groove (23) is provided that is a component of the venting channel.

8. A piston as recited in any one of the previous claims, **characterized in that** the locking element (18) and/or the vent (21) are provided with catch means (22, 24) that make a rotation of the locking element (18) in the vent (21) more difficult in at least one direction of rotation.

9. A piston as recited in any one of the previous claims, **characterized in that** the locking element (18) and/or the vent (21) have stop means (22, 24) that limit a rotation of the locking element (18) in the vent (21), in particular to less than 180°.

10. A piston as recited in any one of the previous claims, **characterized in that** at least one radially extending slot (34) is provided in the front-end wall that ends in the vent (21).

11. A piston as recited in any one of the previous claims, **characterized in that** the base body (25) consists of a softer material than the locking element (18).

12. A cartridge configuration having at least one cartridge that has an anterior end with an outlet connection piece (6, 7) and a diametrically opposite posterior end that has an adapter opening locked by a piston (8) as recited in any one of the previous claims.

## Revendications

1. Piston, en particulier pour l'utilisation en tant que piston de décharge et/ou de fermeture d'une cartouche, avec un corps de base (25) qui présente une paroi latérale dotée de moyens d'étanchéité (14, 17) et une paroi du côté frontal dans laquelle une ouverture de purge d'air (21) est prévue, dans lequel un élément de fermeture (18) est monté de manière rotative dans l'ouverture de purge d'air (21), dans lequel, par une rotation relative de l'élément de fermeture (18) dans l'ouverture de purge d'air (21), un canal de purge d'air (23, 24) peut être ouvert ou fermé,
**caractérisé en ce que** l'élément de fermeture (18) présente une plaque (26) recouvrant au moins en partie la paroi du côté frontal.

2. Piston selon la revendication 1, **caractérisé en ce que** l'élément de fermeture (18) présente une surface extérieure au moins en partie cylindrique dans laquelle au moins un creux (24) est formé, lequel forme une partie du canal de purge d'air, et que l'ouverture de purge d'air (21) présente une surface intérieure au moins en partie cylindrique dans laquelle au moins une saillie (22) adaptée au creux (24) est formée de manière à ce que la saillie (22) se met en prise avec le creux (24) pour la fermeture du canal de purge d'air.

3. Piston selon la revendication 1, **caractérisé en ce que** l'ouverture de purge d'air (21) présente une surface intérieure au moins en partie cylindrique dans laquelle au moins un creux est formé, lequel forme une partie du canal de purge d'air, et que l'élément de fermeture (18) présente une surface extérieure au moins en partie cylindrique dans laquelle au moins une saillie adaptée au creux est formée de manière à ce que la saillie se met en prise avec le creux pour la fermeture du canal de purge d'air.

4. Piston selon la revendication 1, **caractérisé en ce que** l'élément de fermeture (18) présente une première partie de fermeture (28) dotée d'une percée (29), laquelle repose contre une deuxième partie de fermeture (30) également dotée d'une percée (31) dans l'ouverture de purge d'air (21), dans lequel, par une rotation relative de l'élément de fermeture (18) dans l'ouverture de purge d'air (21), les percées (29, 31) peuvent être amenées en recouvrement pour l'ouverture du canal de purge d'air et hors de recouvrement pour la fermeture du canal de purge d'air.

5. Piston selon l'une des revendications précédentes, **caractérisé en ce que** l'élément de fermeture (18) est maintenu dans l'ouverture de purge d'air (21) de manière à ce que l'élément de fermeture (18) soit protégé contre un déplacement dans une direction en éloignement de la paroi du côté frontal.

6. Piston selon la revendication 5, **caractérisé en ce que** l'élément de fermeture (18) est maintenu dans l'ouverture de purge d'air (21) par une liaison par encliquetage ou enclenchement (20).

7. Piston selon l'une des revendications 2 ou 3, **caractérisé en ce que**, sur le côté frontal de l'élément de fermeture (18) tourné vers la paroi du côté frontal, une rainure de fond (23) est prévue, laquelle est une partie constitutive du canal de purge d'air.

8. Piston selon l'une des revendications précédentes, **caractérisé en ce que** l'élément de fermeture (18) et/ou l'ouverture de purge d'air (21) présentent des moyens d'encliquetage (22, 24) qui rendent difficile une rotation de l'élément de fermeture (18) dans l'ouverture de purge d'air (21) dans au moins une direction de rotation.

9. Piston selon l'une des revendications précédentes, **caractérisé en ce que** l'élément de fermeture (18) et/ou l'ouverture de purge d'air (21) présentent des moyens de butée (22, 24) qui limitent une rotation de l'élément de fermeture (18) dans l'ouverture de purge d'air (21) en particulier à moins de 180°.

10. Piston selon l'une des revendications précédentes, **caractérisé en ce que**, dans la paroi du côté frontal, au moins une fente (34) s'étendant radialement est prévue, laquelle débouche dans l'ouverture de purge d'air (21).

11. Piston selon l'une des revendications précédentes, **caractérisé en ce que** le corps de base (25) se compose d'un matériau plus tendre que celui de l'élément de fermeture (18).

12. Agencement de cartouche(s) avec au moins une cartouche, lequel présente une extrémité avant avec une tubulure de sortie (6, 7) et une extrémité arrière située en vis-à-vis, laquelle est dotée d'une ouverture de réception qui est fermée avec un piston (8) selon l'une des revendications précédentes.
